(19) Europäisches Patentamt
European Patent Office
Office européen des brevets

(11) **EP 4 216 107 A1**

(12) **EUROPEAN PATENT APPLICATION**

(43) Date of publication:
**26.07.2023 Bulletin 2023/30**

(21) Application number: **22159292.6**

(22) Date of filing: **28.02.2022**

(51) International Patent Classification (IPC):
*G06N 3/04* *(2023.01)* *G06N 3/08* *(2023.01)*
*G06T 7/20* *(2017.01)* *G06T 7/50* *(2017.01)*
*G06T 7/80* *(2017.01)*

(52) Cooperative Patent Classification (CPC):
**G06N 3/08; G06N 3/045; G06T 7/20; G06T 7/50; G06T 7/80**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.01.2022 US 202217579367**

(71) Applicant: **NavInfo Europe B.V.**
**5657 DB Eindhoven (NL)**

(72) Inventors:
• **VARMA, Arnav**
**EINDHOVEN (NL)**

• **CHAWLA, Hemang**
**EINDHOVEN (NL)**
• **ZONOOZ, Bahram**
**EINDHOVEN (NL)**
• **ARANI, Elahe**
**EINDHOVEN (NL)**

(74) Representative: **van Breda, Jacobus**
**Octrooibureau Los & Stigter B.V.**
**Weteringschans 96**
**1017 XS Amsterdam (NL)**

Remarks:
Amended claims in accordance with Rule 137(2) EPC.

(54) **COMPUTER-IMPLEMENTED METHOD OF SELF-SUPERVISED LEARNING IN NEURAL NETWORK FOR ROBUST AND UNIFIED ESTIMATION OF MONOCULAR CAMERA EGO-MOTION AND INTRINSICS**

(57) A computer-implemented method of self-supervised learning in neural network for scene understanding in autonomously moving vehicles wherein the method to estimate the ego-motion and the intrinsics (focal lengths and principal point) robustly in a unified manner from a pair of input overlapping images captured from a monocular camera, within a self-supervised monocular depth and ego-motion estimation problem by including multi-head self-attention modules within a transformer architecture.

EP 4 216 107 A1

**Description**

BACKGROUND OF THE INVENTION

Field of the Invention

The invention relates to a computer-implemented method of self-supervised learning in a neural network for scene understanding in an autonomously moving vehicle.

3D scene understanding for autonomous driving and advanced driver assistance systems include tasks of scene depth and sensor/vehicle ego-motion estimation. While LiDARs (Light Detection and Ranging) sensors are often used for estimating depths of objects in the scene and vehicle ego-motion, their use is costly. These methods also fail to estimate the depth of some objects due to their specific material properties (eg. surface reflection). Supervised deep learning methods that estimate depth from single images captured by monocular cameras require extensive RGB-D (Red Green Blue - Depth) ground truth annotations, which is also difficult and time-consuming to obtain. These supervised depth estimation methods also do not output ego-motion of the camera. Instead, several methods estimate depth from single images captured by a monocular camera using self-supervised deep learning from consecutive images of a video, while estimating the ego-motion of the camera in parallel. Self-supervised depth estimation does not include labeling of images with ground-truth depth from expensive sensors.

Background Art

Recently, transformer architectures such as Vision Transformer (ViT) [1] and Data-efficient image Transformer (DeiT) [2] have outperformed convolutional neural network (CNN) architectures in image classification. Studies comparing ViT and CNN architectures like ResNet [3] have further demonstrated that transformers are more robust to natural corruptions and adversarial examples in classification [4,5]. These natural corruptions of input images can fall under four categories - noise (Gaussian, shot, impulse), blur (defocus, glass, motion, zoom), weather (snow, frost, fog, brightness), and digital (contrast, elastic, pixelate, JPEG). Adversarial attacks make imperceptible (to humans) changes to input images to create adversarial examples that fool networks. Motivated by their success, researchers have replaced CNN encoders with transformers in scene understanding tasks such as object detection [6, 7], semantic segmentation [8, 9], and supervised monocular depth estimation [10, 11].

However, the self-supervised monocular depth and ego-motion estimation still requires prior knowledge of the camera intrinsics (focal length and principal point) during training, which may be different for each data source, may change over time, or be unknown a priori [12]. Additionally, the output by existing methods rely upon convolutional neural networks (CNNs) that have localized linear operations and lose feature resolution during down-sampling to increase their limited receptive field [11]. Methods relying upon CNNs are not as robust to natural corruptions and adversarial attacks on the input images [4, 5].

The choice of architecture has a major impact on the performance and robustness of a deep learning neural network on a task. Recently, transformer architectures such as Vision Transformer (ViT) [1] and Data-efficient image Transformer (DeiT) [2] have outperformed CNN architectures in image classification. For supervised monocular depth estimation, Dense Prediction Transformer (DPT) [13] uses ViT as the encoder with a convolutional decoder and shows more coherent predictions than CNNs due to the global receptive field of transformers. TransDepth [11] additionally uses a ResNet projection layer and attention gates in the decoder to induce the spatial locality of CNNs for supervised monocular depth and surface-normal estimation. However, these methods do not include ego-motion estimation. Lately, some works have inculcated elements of transformers such as self-attention [14] in self-supervised monocular depth and ego-motion estimation [15, 16]. However, none of the methods provide a way to replace the traditional CNN-based methods (e.g. [17, 18]) for more robust self-supervised monocular depth estimation. Additionally, multiple approaches to supervised camera intrinsics estimation have been proposed [19, 20]. However, these do not solve the problem in a self-supervised manner and require annotating the images with ground truth camera focal length and principal point corresponding to each image. They also require a large variety of such ground-truth camera intrinsics for accurate estimation. While self-supervised approaches to camera intrinsics exist [21], they are also based upon the less robust CNNs.

Note that the this application refers to a number of publications. Discussion of such herein is given for more complete background and is not to be construed as an admission that such publications are prior art for patentability determination purposes.

BRIEF SUMMARY OF THE INVENTION

It is an object of the current invention to provide solutions for the shortcomings of the prior art. This and other

**EP 4 216 107 A1**

objects which will become apparent from the following disclosure, are provided with a computer-implemented method of self-supervised learning having the features of one or more of the appended claims.

According to a first aspect of the invention the method comprises the step of processing images, acquired by at least one monocular camera, in a vision transformer architecture with Multi-Head Self-Attention for simultaneously estimating:

a scene depth;
a vehicle ego-motion; and
intrinsics of said at least one monocular camera wherein said intrinsics comprise focal lengths $f_x$ and $f_y$ and a principal point $(c_x, c_y)$.

Multi-Head Self-Attention processes inputs at constant resolution and can simultaneously attend to global and local features unlike the methods that use convolutional neural networks.

Additionally, the method comprises the steps of:

acquiring a set of images comprising temporally consecutive and spatially overlapping images; and
arranging said set of images into at least triplets of temporally consecutive and spatially overlapping images.

This will provide the neural network with an input that is temporally and spatially coherent. Suitably, the method comprises the steps of:

feeding at least one image of the at least triplets into a depth encoder for extracting depth features; and
extracting a pixelwise depth of the at least one image by feeding said depth features into a depth decoder.

A single image is usually enough for extracting the depth of a given scene.

More suitably, the step of extracting a pixelwise depth of the at least one image comprises the steps of:

providing an Embed module for converting non-overlapping image patches into tokens;
providing a Transformer block comprising at least one transformer layer for processing said tokens with Multi-Head Self-Attention modules;
providing at least one Reassemble module for extracting image-like features from at least one layer of the Transformer block by dropping a readout token and concatenating remaining tokens;
applying pointwise convolution for changing the number of channels and for up-sampling the representations as part of the at least one Reassemble module;
providing at least one Fusion module for progressively fusing information from the corresponding at least one Reassemble module with information passing through the decoder; and
providing at least one Head modules at the end of each

Fusion module for predicting the scene depth upon at least one scale.

Instead of taking image sequence as input, the method estimates the depth disparities in a single RGB image.

Furthermore, the method comprises the steps of:

feeding at least two images of said triplets into an ego-motion and intrinsics encoder for extracting ego-motion and intrinsics features; and
extracting relative translation, relative rotation and camera focal lengths and principal point by feeding ego-motion and intrinsics features into an ego-motion and intrinsics decoder.

Advantageously, the step of extracting relative translation, relative rotation and camera focal lengths and principal point comprises the steps of:

providing an Embed module for converting non-overlapping image patches into tokens;
concatenating the at least two images along a channel dimension;
applying the Embed module along the channel dimension at least two times;
providing a Transformer block comprising at least one transformer layer for processing said tokens with Multi-Head Self-Attention modules;
providing a Reassemble module for extracting image-like features from layers of the Transformer block by dropping a readout token and concatenating remaining tokens;
applying pointwise convolution for changing the number of channels and for up-sampling the representations; and

3

providing at least one convolutional path for learning camera focal lengths and principal point.

Ultimately, the method comprises the step of synthesizing a target image from the at least triplets by using the pixelwise depth, the relative translation, the relative rotation and the camera focal lengths and principal point.

Furthermore, the method comprises the steps of:

computing a loss value for training with photometric and geometric losses by comparing synthesized and target images; and
training depth, ego-motion and camera intrinsics model by minimizing the loss.

In an advantageous embodiment of the invention, the method comprises the steps of:

acquiring at least a pair of consecutive and spatially overlapping images of a scene; and
generating focal lengths and a principal point corresponding to a monocular camera capturing the scene by feeding said at least pair of images into a self-trained intrinsics estimation model.

Suitably, the method comprises the steps of:

determining a statistical representation of the distribution of output camera intrinsics from a plurality of images; and
using said statistical representation to compute statistical measures representing the distribution of output camera intrinsics for multiple imaging devices.

This allows for a seamless processing of a continuous stream of consecutive images regardless of the type of camera and the captured scenes.

Objects, advantages and novel features, and further scope of applicability of the present invention will be set forth in part in the detailed description to follow, taken in conjunction with the accompanying drawings, and in part will become apparent to those skilled in the art upon examination of the following, or may be learned by practice of the invention. The objects and advantages of the invention may be realized and attained by means of the instrumentalities and combinations particularly pointed out in the appended claims.

## BRIEF DESCRIPTION OF THE SEVERAL VIEWS OF THE DRAWINGS

The accompanying drawings, which are incorporated into and form a part of the specification, illustrate one or more embodiments of the present invention and, together with the description, serve to explain the principles of the invention. The drawings are only for the purpose of illustrating one or more embodiments of the invention and are not to be construed as limiting the invention. In the drawings:

Figure 1 shows a diagram of the computer-implemented method according to an embodiment of the present invention;

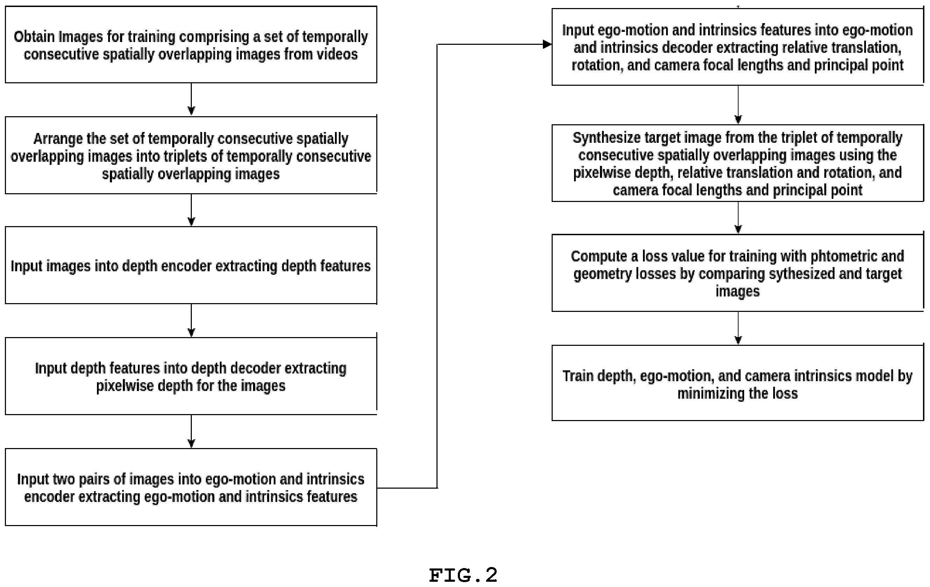

Figure 2 shows a diagram of the computer-implemented method according to an embodiment of the present invention; and
Figure 3 shows a diagram of the computer-implemented method according to an embodiment of the present invention. Whenever in the figures the same reference numerals are applied, these numerals refer to the same parts.

## DETAILED DESCRIPTION OF THE INVENTION

Given a set of n images from a video sequence, depth, ego-motion and camera intrinsics prediction networks are simultaneously trained, wherein the camera intrinsics prediction network is a vision transformer architecture with Multi-Head Self-Attention (MHSA). The inputs to the networks are a sequence of temporally consecutive RGB image triplets $I_{-1}$, $I_0$, $I_1 \in \mathbb{R}^{h \times W \times 3}$, where h is the image height and W is the image width. The depth network learns to output dense depth (or disparity) for each pixel coordinate p of a single image. Simultaneously, the ego-motion network learns to output relative translation $t_x$, $t_y$, $t_z$ and rotation angles $r_x$, $r_y$, $r_z$ between a pair of overlapping images. The translations in x, y, and z form the translation vector T. The rotation angles are used to form the rotation matrix R. The intrinsics network is combined with the ego-motion network and outputs the camera focal lengths $f_x$ and $f_y$ and principal point $(c_x, c_y)$ for each input pair of images. The focal lengths and the principal point together form the camera intrinsics matrix K. The predicted depth, ego-motion, and camera intrinsics are linked together via the perspective projection transform, for each pair of source (s) and target (t) images:

$$p_s \sim KR_{s \leftarrow t} D_t(p_t) K^{-1} p_t + K t_{s \leftarrow t}$$

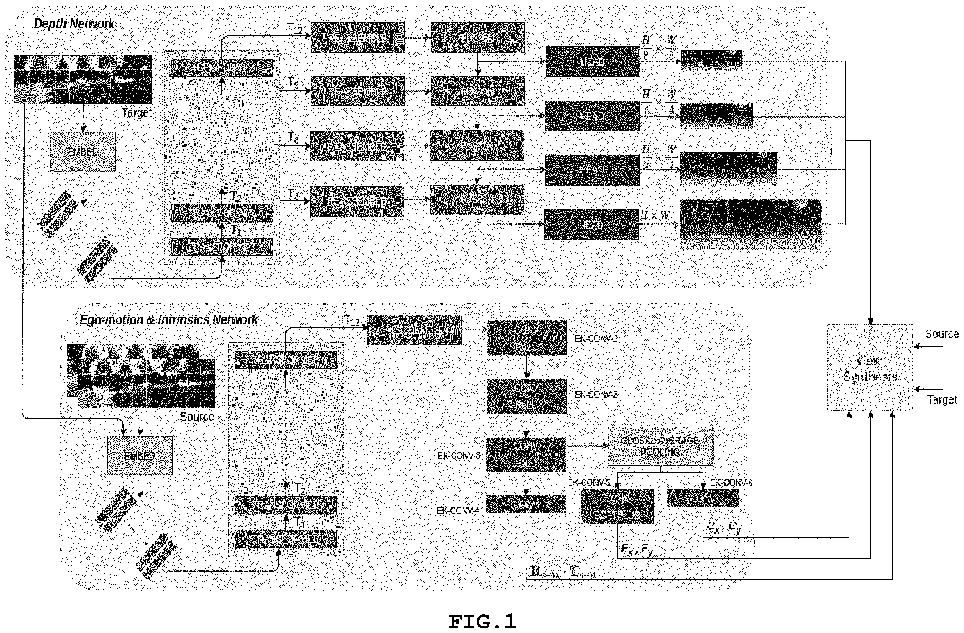

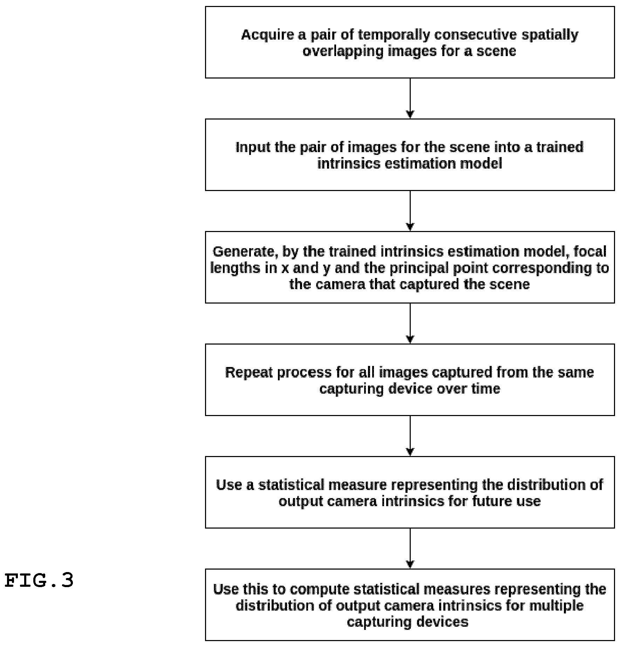

that warps the source images $I_s \in \{I_{-1}, I_1\}$ to the target image $I_t \in \{I_0\}$. This warping process is denoted by view synthesis in literature [17, 21, 22, 23] as shown in Figure 1. In an exemplary embodiment of the invention, the proposed architecture is trained using photometric and/or geometric losses from any of [17, 21, 22, 23] or any other losses between the warped source images and the target image. Those methods however use only convolutional neural networks. The architectures of the ego-motion and depth networks is developed upon Data Efficient Image Transformers (DeiT) [2]. Figure 3 describes the flow of the training process.

Architecture of the ego-motion and intrinsics networks:

The input to the network is a pair of two consecutive RGB images from video, each $I \in \mathbb{R}^{H \times W \times 3}$, concatenated along the channel dimension.

As shown in Figure 1, it first has a Embed module, which is part of the encoder. It takes two consecutive and spatially-overlapping images from a sequence, and converts non-overlapping input patches of size pxp into $N_p = H \cdot W / p^2$ tokens $t_i \in \mathbb{R}^d \ \forall i \in \{1, 2, \ldots N_p\}$, where d = 768. This is implemented as a large pxp convolution with stride s = p where p = 16. The output from this module is concatenated with a readout token of the same size as the remaining tokens. In previous literature, the input to vision transformers is a single image, the input to the ego-motion network of the current invention comprises two images concatenated along the channel dimension. To resolve this, the embedding layer is repeated along the channel dimension.

Next, the current invention comprises a transformer block, that is also part of the encoder, and comprises 12 transformer layers which process these tokens with multi-head self-attention (MHSA) [14] modules. MHSA processes inputs at constant resolution and can simultaneously attend to global and local features unlike the methods that use convolutional neural networks.

Thereafter, the method comprises a reassemble module to pass transformer tokens to the decoder. It is responsible for extracting image-like features from the transformer layers by dropping the readout token and concatenating the remaining tokens in 2D. This is followed by pointwise convolutions to change the number of channels, and transpose convolution in to upsample the representations. The operations in the Reassemble module are described in Table 1.

In the ego-motion and intrinsics decoder as shown in Figure 1, the decoder is composed of convolutional layers, with kernel size, output channels, and activations as described in Table 3. A convolutional path is added in the ego-motion decoder to also learn the intrinsics. The decoder features before activation from the penultimate layer are passed through a global average pooling layer, followed by two branches of pointwise convolutions to reduce the number of channels from 256 to 2. One branch uses a softplus activation to estimate focal lengths along x and y axes as the focal lengths are always positive. The other branch doesn't use any activation to estimate the principal point as it has no such constraint. Figure 3 describes how the intrinsics estimation model can be used to estimate the camera intrinsics from different scenes and cameras across time.

Architecture of the depth network:

The input to the network is a single RGB image $I \in \mathbb{R}^{H \times W \times 3}$.

Figure 1 shows an example embodiment of the depth network also based on transformer with MHSA composed of the five following components.

An embed module which is part of the encoder. It takes an image I, and converts non-overlapping image patches of size pxp into $N_p = H \cdot W / p^2$ tokens $t_i \in \mathbb{R}^d \ \forall i \in \{1, 2, \ldots N_p\}$, where d = 768. This is implemented as a large pxp convolution with stride s = p where p = 16. The output from this module is concatenated with a readout token of the same size as the remaining tokens.

Additionally, the method comprises a transformer block, that is also part of the encoder, and comprises 12 transformer layers which process these tokens with MHSA modules. MHSA processes inputs at constant resolution and can simultaneously attend to global and local features unlike the methods that use convolutional neural networks.

Unlike the ego-motion network, the method comprises four Reassemble modules in the decoder, which are responsible for extracting image-like features from the 3rd, 6th, 9th, and 12th (final) transformer layers by dropping the readout token and concatenating the remaining tokens in 2D. This is followed by pointwise convolutions to change the number of channels, and transpose convolution in the first two reassemble modules to upsample the representations (corresponding to T3 and T6 in Figure 1). The operations in the Reassemble module are described in Table 1.

Additionally, the method comprises four Fusion modules in the decoder, based on RefineNet [24]. They progressively fuse information from the Reassemble modules with information passing through the decoder, and up-sample the features by 2 at each stage. Batch normalization is enabled in the decoder as it was found to be helpful for self-supervised depth prediction.

Finally, the method comprises four Head modules at the end of each Fusion module to predict depth at 4 scales. The Head modules use 2 convolutions. Details of the Head module layers are described in Table 2.

Table 1: Architecture details of the Reassemble modules. *DN* and *EN* refer to depth and ego-motion networks, respectively. The subscripts of *DN* refer to the transformer layer from which the respective Reassemble module takes its input (see Figure 1). Input image size is H×W, p refers to the patch size, $N_p = HP/p^2$ refers to the number of patches from the image, and d refers to the feature dimension of the transformer features.

| Operation | Input size | Output size | Function | Parameters ($DN_3$, $DN_6$, $DN_9$, $DN_{12}$, *EN*) |
|---|---|---|---|---|
| Read | $(N_p+1) \times d$ | $N_p \times d$ | Drop readout token | - |
| Concatenate | $N_p \times d$ | $d \times H/p \times W/p$ | Transpose and Unflatten | - |
| Pointwise Convolution | $d \times H/p \times W/p$ | $N_c \times H/p \times W/p$ | $N_c$ channels | $N_c$ = [96,768,1536,3072,2048] |
| Strided Convolution | $N_c \times H/p \times W/p$ | $N_c \times H/2p \times W/2p$ | $k \times k$ convolution, Stride= 2, $N_c$ channels, padding= 1 | $k$ = [-,-,-,3,-] |
| Transpose Convolution | $N_c \times H/p \times W/p$ | $N_c \times H/s \times W/s$ | $p/s \times p/s$ deconvolution, stride= $p/s$, $N_c$ channels | $s$ = [4,8,-,-] |

Table 2: Pose decoder layer details specifying kernel size, output channels, and activation.

| Layers |
|---|
| |
| 32 $3 \times 3$ *Convolutions*, stride=1, padding= 1 |
| *ReLU* |
| *Bilinear Interpolation* to upsample by 2 |
| 32 *Pointwise Convolutions* |
| *Sigmoid* |

Table 3: Architecture details of Head modules in Figure 1.

| Layer | Kernel size | Output channels | Activation |
|---|---|---|---|
| EK-Conv-1 | 1 | 256 | ReLU |
| EK-Conv-2 | 3 | 256 | ReLU |
| EK-Conv-3 | 3 | 256 | ReLU |
| EK-Conv-4 | 1 | 6 | - |
| EK-Conv-5 | 1 | 2 | Softplus |
| EK-Conv-6 | 1 | 2 | - |

Optionally, embodiments of the present invention can include a general or specific purpose computer or distributed system programmed with computer software implementing steps described above, which computer software may be in any appropriate computer language, including but not limited to C++, FORTRAN, BASIC, Java, Python, Linux, assembly language, microcode, distributed programming languages, etc. The apparatus may also include a plurality of such computers / distributed systems (e.g., connected over the Internet and/or one or more intranets) in a variety of hardware implementations. For example, data processing can be performed by an appropriately programmed microprocessor, computing cloud, Application Specific Integrated Circuit (ASIC), Field Programmable Gate Array (FPGA), or the like, in conjunction with appropriate memory, network, and bus elements. One or more processors and/or microcontrollers can operate via instructions of the computer code and the software is preferably stored on one or more tangible non-transitive memory-storage devices.

Although the invention has been discussed in the foregoing with reference to an exemplary embodiment of the method of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Embodiments of the present invention can include every combination of features that are disclosed herein independently from each other. Although the invention has been described in detail with particular reference to the disclosed embodiments, other embodiments can achieve the same results. Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

## References

[1] Dosovitskiy, A., Beyer, L., Kolesnikov, A., Weissenborn, D., Zhai, X., Unterthiner, T., Dehghani, M., Minderer, M., Heigold, G., Gelly, S., Uszkoreit, J., and Houlsby, N. (2021). An image is worth 16x16 words: Transformers for image recognition at scale. ICLR.

[2] Touvron, H., Cord, M., Douze, M., Massa, F., Sablayrolles, A., and Jégou, H. (2021). Training data-efficient image transformers & distillation through attention. In International Conference on Machine Learning, pages 10347-10357. PMLR

[3] He, K., Zhang, X., Ren, S., and Sun, J. (2016). Deep residual learning for image recognition. In Proceedings of the IEEE conference on computer vision and pattern recognition, pages 770-778.

[4] Bhojanapalli, S., Chakrabarti, A., Glasner, D., Li, D., Unterthiner, T., and Veit, A. (2021). Understanding robustness of transformers for image classification. arXiv preprint arXiv:2103.14586.

[5] Paul, S. and Chen, P.-Y. (2021). Vision transformers are robust learners. arXiv preprint arXiv:2105.07581.

[6] Carion, N., Massa, F., Synnaeve, G., Usunier, N., Kirillov, A., and Zagoruyko, S. (2020). End-to-end object detection with transformers. In European Conference on Computer Vision, pages 213-229. Springer.

[7] Liu, Z., Lin, Y., Cao, Y., Hu, H., Wei, Y., Zhang, Z., Lin, S., and Guo, B. (2021). Swin transformer: Hierarchical vision transformer using shifted windows. ArXiv preprint arXiv:2103.14030.

[8] Zheng, S., Lu, J., Zhao, H., Zhu, X., Luo, Z., Wang, Y., Fu, Y., Feng, J., Xiang, T., Torr, P. H., et al. (2021). Rethinking semantic segmentation from a sequence-to-sequence perspective with transformers. In Proceedings of the IEEE/CVF Conference on Computer Vision and Pattern Recognition, pages 6881-6890.

[9] Strudel, R., Garcia, R., Laptev, I., and Schmid, C. (2021). Segmenter: Transformer for semantic segmentation. arXiv preprint arXiv:2105.05633.

[10] Ranftl, R., Lasinger, K., Hafner, D., Schindler, K., and Koltun, V. (2020). Towards robust monocular depth estimation: Mixing datasets for zero-shot cross-dataset transfer. IEEE Transactions on Pattern Analysis and Machine Intelligence (TPAMI).

[11] Yang, Guanglei, et al. "Transformer-based attention networks for continuous pixel-wise prediction." Proceedings of the IEEE/CVF International Conference on Computer Vision. 2021.

[12] Chawla, H., Jukola, M., Brouns, T., Arani, E., and Zonooz, B. (2020). Crowdsourced 3d mapping: A combined multi-view geometry and self-supervised learning approach. In 2020 IEEE/RSJ International Conference on Intelligent Robots and Systems (IROS), pages 4750-4757. IEEE.

[13] Ranftl, R., Bochkovskiy, A., and Koltun, V. (2021). Vision transformers for dense prediction. In Proceedings of the IEEE/CVF International Conference on Computer Vision, pages 12179-12188.

[14] Vaswani, A., Shazeer, N., Parmar, N., Uszkoreit, J., Jones, L., Gomez, A. N., Kaiser, L., and Polosukhin, I. (2017). Attention is all you need. In Advances in neural information processing systems, pages 5998-6008.

[15] Johnston, A. and Carneiro, G. (2020). Self-supervised monocular trained depth estimation using self-attention and discrete disparity volume. In Proceedings of the ieee/cvf conference on computer vision and pattern recognition, pages 4756-4765

[16] Xiang, X., Kong, X., Qiu, Y., Zhang, K., and Lv, N. (2021). Self-supervised monocular trained depth estimation using triplet attention and funnel activation. Neural Processing Letters, pages 1-18.

[17] Godard, C., Mac Aodha, O., Firman, M., and Brostow, G. J. (2019). Digging into self-supervised monocular depth estimation. In Proceedings of the IEEE/CVF International Conference on Computer Vision, pages 3828-3838

[18] Lyu, X., Liu, L., Wang, M., Kong, X., Liu, L., Liu, Y., Chen, X., and Yuan, Y. (2020). Hr-depth: high resolution self-supervised monocular depth estimation. CoRR abs/2012.07356

[19] Lopez, M., Mari, R., Gargallo, P., Kuang, Y., Gonzalez-Jimenez, J., and Haro, G. (2019). Deep single image camera calibration with radial distortion. In Proceedings of the IEEE/CVF Conference on Computer Vision and Pattern Recognition, pages 11817-11825

[20] Zhuang, B., Tran, Q.-H., Lee, G. H., Cheong, L. F., and Chandraker, M. (2019). Degeneracy in self- calibration revisited and a deep learning solution for uncalibrated slam. In 2019 IEEE/RSJ International Conference on Intelligent Robots and Systems (IROS), pages 3766-3773. IEEE.

[21] Gordon, A., Li, H., Jonschkowski, R., & Angelova, A. (2019). Depth from videos in the wild: Unsupervised monocular depth learning from unknown cameras. In Proceedings of the IEEE/CVF International Conference on Computer Vision (pp. 8977-8986).

[22] Chawla, H., Varma, A., Arani, E., and Zonooz, B. (2021). Multimodal scale consistency and awareness for monocular self-supervised depth estimation. In 2021 IEEE International Conference on Robotics and Automation (ICRA). IEEE.

[23] Bian, J., Li, Z., Wang, N., Zhan, H., Shen, C., Cheng, M. M., & Reid, I. (2019). Unsupervised scale-consistent depth and ego-motion learning from monocular video. Advances in neural information processing systems, 32, 35-45.

[24] Lin, G., Milan, A., Shen, C., and Reid, I. (2017). Refinenet: Multi-path refinement networks for high-resolution semantic segmentation. In Proceedings of the IEEE conference on computer vision and pattern recognition, pages 1925-1934.

**Claims**

1. A computer-implemented method of self-supervised learning in a neural network for scene understanding in an autonomously moving vehicle, wherein said method comprises the step of processing images, acquired by at least one monocular camera, in a vision transformer architecture with Multi-Head Self-Attention for simultaneously estimating:

   a scene depth;
   a vehicle ego-motion; and

   intrinsics of said at least one monocular camera wherein said intrinsics comprise focal lengths $f_x$ and $f_y$ and a principal point $(c_x, c_y)$.

2. The computer-implemented method according to claim 1, wherein the method comprises the steps of:

   acquiring a set of images comprising temporally consecutive and spatially overlapping images; and
   arranging said set of images into at least triplets of temporally consecutive and spatially overlapping images.

3. The computer-implemented method according to claim 2, wherein the method comprises the steps of:

   feeding at least one image of the triplets into a depth encoder for extracting depth features; and
   extracting a pixelwise depth of the at least one image by feeding said depth features into a depth decoder.

4. The computer-implemented method according to claim 3, wherein the step of extracting a pixelwise depth of the at least one image comprises the steps of:

   providing an Embed module for converting non-overlapping image patches into tokens;
   providing a Transformer block comprising at least one transformer layer for processing said tokens with Multi-Head Self-Attention modules;
   providing at least one Reassemble module for extracting image-like features from at least one layer of the Transformer block by dropping a readout token and concatenating remaining tokens;

applying pointwise convolution for changing the number of channels and for up-sampling the representations as part of the at least one Reassemble module;

providing at least one Fusion module for progressively fusing information from the corresponding at least one Reassemble module with information passing through the decoder; and

providing at least one Head modules at the end of each Fusion module for predicting the scene depth upon at least one scale.

5. The computer-implemented method according to any one of claims 2 - 4, wherein said method comprises the steps of: feeding at least two images of said triplets into an ego-motion and intrinsics encoder for extracting ego-motion and intrinsics features; and extracting relative translation, relative rotation and camera focal lengths and principal point by feeding ego-motion and intrinsics features into an ego-motion and intrinsics decoder.

6. The computer-implemented method according to claim 5, wherein the step of extracting relative translation, relative rotation and camera focal lengths and principal point comprises the steps of:

providing an Embed module for converting non-overlapping image patches into tokens;

concatenating the at least two images along a channel dimension;

applying the Embed module along the channel dimension at least two times;

providing a Transformer block comprising at least one transformer layer for processing said tokens with Multi-Head Self-Attention modules;

providing a Reassemble module for extracting image-like features from layers of the Transformer block by dropping a readout token and concatenating remaining tokens;

applying pointwise convolution for changing the number of channels and for up-sampling the representations; and

providing at least one convolutional path for learning camera focal lengths and principal point.

7. The computer-implemented method according to any one of claims 2 - 6, wherein the method comprises the step of synthesizing a target image from the triplets by using the pixelwise depth, the relative translation, the relative rotation and the camera focal lengths and principal point.

8. The computer-implemented method according to any one of claims 1 - 7, wherein the method comprises the steps of:

computing a loss value for training with photometric and geometric losses by comparing synthesized and target images; and

training depth, ego-motion and camera intrinsics model by minimizing the loss.

9. The computer-implemented method according to any one of claims 1 - 8, wherein said method comprises the steps of:

acquiring at least a pair of consecutive and spatially overlapping images of a scene; and

generating focal lengths and a principal point corresponding to a monocular camera capturing the scene by feeding said pair of images into a self-trained intrinsics estimation model.

10. The computer-implemented method according to any one of claims 1 - 9, wherein said method comprises the steps of:

determining a statistical representation of a distribution of output camera intrinsics from a plurality of images; and

using said statistical representation to compute statistical measures representing the distribution of output camera intrinsics for multiple imaging devices.

**Amended claims in accordance with Rule 137(2) EPC.**

1. A computer-implemented method of self-supervised learning in a neural network for scene understanding in an autonomously moving vehicle, wherein said method comprises the step of processing images, acquired by at least one monocular camera, for simultaneously estimating:

a scene depth;

a vehicle ego-motion; and

intrinsics of said at least one monocular camera wherein said intrinsics comprise focal lengths $f_x$ and $f_y$ and a principal point $(c_x, c_y)$, **characterized in that**

said processing of images is in a vision transformer architecture with Multi-Head Self-Attention,

wherein the method comprises the steps of:

acquiring a set of images comprising temporally consecutive and spatially overlapping images; and arranging said set of images into at least triplets of temporally consecutive and spatially overlapping images. feeding at least two images of said triplets into an ego-motion and intrinsics encoder for extracting ego-motion and intrinsics features; extracting a relative translation, a relative rotation, the focal lengths and the principal point of the camera by:

feeding the ego-motion and the intrinsics features into the ego-motion and intrinsics decoder; providing an Embed module for converting non-overlapping image patches into tokens; concatenating the at least two images along a channel dimension; applying the Embed module along the channel dimension at least two times; providing a Transformer block comprising at least one transformer layer for processing said tokens with Multi-Head Self-Attention modules; providing a Reassemble module for extracting image-like features from layers of the Transformer block by dropping a readout token and concatenating remaining tokens; applying pointwise convolution for changing the number of channels and for up-sampling the representations; and providing at least one convolutional path for learning camera focal lengths and principal point.

2. The computer-implemented method according to claim 1, **characterized in that** the method comprises the steps of:

feeding at least one image of the triplets into a depth encoder for extracting depth features; and extracting a pixelwise depth of the at least one image by feeding said depth features into a depth decoder by:

providing an Embed module for converting non-overlapping image patches into tokens; providing a Transformer block comprising at least one transformer layer for processing said tokens with Multi-Head Self-Attention modules; providing at least one Reassemble module for extracting image-like features from at least one layer of the Transformer block by dropping a readout token and concatenating remaining tokens; applying pointwise convolution for changing the number of channels and for up-sampling the representations as part of the at least one Reassemble module; providing at least one Fusion module for progressively fusing information from the corresponding at least one Reassemble module with information passing through the decoder; and providing at least one Head modules at the end of each Fusion module for predicting the scene depth upon at least one scale.

3. The computer-implemented method according to claim - 1 or 2, **characterized in that** the method comprises the step of synthesizing a target image from the triplets by using the pixelwise depth, the relative translation, the relative rotation and the camera focal lengths and principal point.

4. The computer-implemented method according to any one of the preceding claims, **characterized in that** the method comprises the steps of:

computing a loss value for training with photometric and geometric losses by comparing synthesized and target images; and training depth, ego-motion and camera intrinsics model by minimizing the loss.

5. The computer-implemented method according to any one of the preceding claims, **characterized in that** said method comprises the steps of:

acquiring at least a pair of consecutive and spatially overlapping images of a scene; and generating focal lengths and a principal point corresponding to a monocular camera capturing the scene by feeding said pair of images into a self-trained intrinsics estimation model.

6. The computer-implemented method according to any one of the preceding claims, **characterized in that** said method comprises the steps of:

determining a statistical representation of a distribution of output camera intrinsics from a plurality of images; and using said statistical representation to compute statistical measures representing the distribution of output camera intrinsics for multiple imaging devices.

FIG. 1

Obtain Images for training comprising a set of temporally consecutive spatially overlapping images from videos

↓

Arrange the set of temporally consecutive spatially overlapping images into triplets of temporally consecutive spatially overlapping images

↓

Input images into depth encoder extracting depth features

↓

Input depth features into depth decoder extracting pixelwise depth for the images

↓

Input two pairs of images into ego-motion and intrinsics encoder extracting ego-motion and intrinsics features

↓

Input ego-motion and intrinsics features into ego-motion and intrinsics decoder extracting relative translation, rotation, and camera focal lengths and principal point

↓

Synthesize target image from the triplet of temporally consecutive spatially overlapping images using the pixelwise depth, relative translation and rotation, and camera focal lengths and principal point

↓

Compute a loss value for training with phtometric and geometry losses by comparing sythesized and target images

↓

Train depth, ego-motion, and camera intrinsics model by minimizing the loss

**FIG. 2**

Acquire a pair of temporally consecutive spatially overlapping images for a scene

↓

Input the pair of images for the scene into a trained intrinsics estimation model

↓

Generate, by the trained intrinsics estimation model, focal lengths in x and y and the principal point corresponding to the camera that captured the scene

↓

Repeat process for all images captured from the same capturing device over time

↓

Use a statistical measure representing the distribution of output camera intrinsics for future use

↓

Use this to compute statistical measures representing the distribution of output camera intrinsics for multiple capturing devices

FIG. 3

Europäisches
Patentamt

European
Patent Office

Office européen
des brevets

# EUROPEAN SEARCH REPORT

Application Number

EP 22 15 9292

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VARUN RAVI KUMAR ET AL: "SVDistNet: Self-Supervised Near-Field Distance Estimation on Surround View Fisheye Cameras", ARXIV.ORG, CORNELL UNIVERSITY LIBRARY, 201 OLIN LIBRARY CORNELL UNIVERSITY ITHACA, NY 14853, 9 April 2021 (2021-04-09), XP081937031, * abstract; figures 1-3 * * Section I, III-V *<br>----- | 1-10 | INV.<br>G06N3/04<br>G06N3/08<br>G06T7/20<br>G06T7/50<br>G06T7/80 |
| X | IGOR VASILJEVIC ET AL: "Neural Ray Surfaces for Self-Supervised Learning of Depth and Ego-motion", ARXIV.ORG, CORNELL UNIVERSITY LIBRARY, 201 OLIN LIBRARY CORNELL UNIVERSITY ITHACA, NY 14853, 15 August 2020 (2020-08-15), XP081742151, * abstract; figures 1,2,4 * * Section 1, 2.2, 3, 4, 5.1 *<br>----- | 1-10 | |
| X | RANFTL RENE ET AL: "Vision Transformers for Dense Prediction", 2021 IEEE/CVF INTERNATIONAL CONFERENCE ON COMPUTER VISION (ICCV), IEEE, 10 October 2021 (2021-10-10), pages 12159-12168, XP034093831, DOI: 10.1109/ICCV48922.2021.01196 [retrieved on 2022-02-10] * abstract; figures 1,2 * * Section 3 *<br>----- | 1-10 | TECHNICAL FIELDS SEARCHED (IPC)<br><br>G06N<br>G06T |

The present search report has been drawn up for all claims

| Place of search | Date of completion of the search | Examiner |
|---|---|---|
| The Hague | 6 July 2022 | Houtgast, Ernst |

## REFERENCES CITED IN THE DESCRIPTION

**Non-patent literature cited in the description**

- **DOSOVITSKIY, A. ; BEYER, L. ; KOLESNIKOV, A. ; WEISSENBORN, D. ; ZHAI, X. ; UNTERTHINER, T. ; DEHGHANI, M. ; MINDERER, M. ; HEIGOLD, G. ; GELLY, S.** An image is worth 16x16 words: Transformers for image recognition at scale. *ICLR,* 2021
- Training data-efficient image transformers & distillation through attention. **TOUVRON, H. ; CORD, M. ; DOUZE, M. ; MASSA, F. ; SABLAYROLLES, A. ; JÉGOU, H.** International Conference on Machine Learning. PMLR, 2021, 10347-10357
- **HE, K. ; ZHANG, X. ; REN, S. ; SUN, J.** Deep residual learning for image recognition. *Proceedings of the IEEE conference on computer vision and pattern recognition,* 2016, 770-778
- **BHOJANAPALLI, S. ; CHAKRABARTI, A. ; GLASNER, D. ; LI, D. ; UNTERTHINER, T. ; VEIT, A.** Understanding robustness of transformers for image classification. *arXiv:2103.14586,* 2021
- **PAUL, S. ; CHEN, P.-Y.** Vision transformers are robust learners. *arXiv:2105.07581,* 2021
- End-to-end object detection with transformers. **CARION, N. ; MASSA, F. ; SYNNAEVE, G. ; USUNIER, N. ; KIRILLOV, A. ; ZAGORUYKO, S.** European Conference on Computer Vision. Springer, 2020, 213-229
- **LIU, Z. ; LIN, Y. ; CAO, Y. ; HU, H. ; WEI, Y. ; ZHANG, Z. ; LIN, S. ; GUO, B.** Swin transformer: Hierarchical vision transformer using shifted windows. *arXiv:2103.14030,* 2021
- **ZHENG, S. ; LU, J. ; ZHAO, H. ; ZHU, X. ; LUO, Z. ; WANG, Y. ; FU, Y. ; FENG, J. ; XIANG, T. ; TORR, P. H. et al.** Rethinking semantic segmentation from a sequence-to-sequence perspective with transformers. *Proceedings of the IEEE/CVF Conference on Computer Vision and Pattern Recognition,* 2021, 6881-6890
- **STRUDEL, R. ; GARCIA, R. ; LAPTEV, I. ; SCHMID, C.** Segmenter: Transformer for semantic segmentation. *arXiv:2105.05633,* 2021
- **RANFTL, R. ; LASINGER, K. ; HAFNER, D. ; SCHINDLER, K. ; KOLTUN, V.** Towards robust monocular depth estimation: Mixing datasets for zero-shot cross-dataset transfer. *IEEE Transactions on Pattern Analysis and Machine Intelligence (TPAMI),* 2020

- **YANG, GUANGLEI et al.** Transformer-based attention networks for continuous pixel-wise prediction. *Proceedings of the IEEE/CVF International Conference on Computer Vision,* 2021
- Crowdsourced 3d mapping: A combined multi-view geometry and self-supervised learning approach. **CHAWLA, H. ; JUKOLA, M. ; BROUNS, T. ; ARANI, E. ; ZONOOZ, B.** 2020 IEEE/RSJ International Conference on Intelligent Robots and Systems (IROS). IEEE, 2020, 4750-4757
- **RANFTL, R. ; BOCHKOVSKIY, A. ; KOLTUN, V.** Vision transformers for dense prediction. *Proceedings of the IEEE/CVF International Conference on Computer Vision,* 2021, 12179-12188
- **VASWANI, A. ; SHAZEER, N. ; PARMAR, N. ; USZKOREIT, J. ; JONES, L. ; GOMEZ, A. N. ; KAISER, L. ; POLOSUKHIN, I.** Attention is all you need. *Advances in neural information processing systems,* 2017, 5998-6008
- **JOHNSTON, A. ; CARNEIRO, G.** Self-supervised monocular trained depth estimation using self-attention and discrete disparity volume. *Proceedings of the ieee/cvf conference on computer vision and pattern recognition,* 2020, 4756-4765
- **XIANG, X. ; KONG, X. ; QIU, Y. ; ZHANG, K. ; LV, N.** Self-supervised monocular trained depth estimation using triplet attention and funnel activation. *Neural Processing Letters,* 2021, 1-18
- **GODARD, C. ; MAC AODHA, O. ; FIRMAN, M. ; BROSTOW, G. J.** Digging into self-supervised monocular depth estimation. *Proceedings of the IEEE/CVF International Conference on Computer Vision,* 2019, 3828-3838
- **LYU, X. ; LIU, L. ; WANG, M. ; KONG, X. ; LIU, L. ; LIU, Y. ; CHEN, X. ; YUAN, Y.** Hr-depth: high resolution self-supervised monocular depth estimation. *CoRR abs/2012.07356,* 2020
- **LOPEZ, M. ; MARI, R. ; GARGALLO, P. ; KUANG, Y. ; GONZALEZ-JIMENEZ, J. ; HARO, G.** Deep single image camera calibration with radial distortion. *Proceedings of the IEEE/CVF Conference on Computer Vision and Pattern Recognition,* 2019, 11817-11825
- Degeneracy in self- calibration revisited and a deep learning solution for uncalibrated slam. **ZHUANG, B. ; TRAN, Q.-H. ; LEE, G. H. ; CHEONG, L. F. ; CHANDRAKER, M.** 2019 IEEE/RSJ International Conference on Intelligent Robots and Systems (IROS). IEEE, 2019, 3766-3773

- **GORDON, A. ; LI, H. ; JONSCHKOWSKI, R. ; ANGELOVA, A.** Depth from videos in the wild: Unsupervised monocular depth learning from unknown cameras. *Proceedings of the IEEE/CVF International Conference on Computer Vision,* 2019, 8977-8986
- Multimodal scale consistency and awareness for monocular self-supervised depth estimation. **CHAWLA, H. ; VARMA, A. ; ARANI, E. ; ZONOOZ, B.** 2021 IEEE International Conference on Robotics and Automation (ICRA). IEEE, 2021

- **BIAN, J. ; LI, Z. ; WANG, N. ; ZHAN, H. ; SHEN, C. ; CHENG, M. M. ; REID, I.** Unsupervised scale-consistent depth and ego-motion learning from monocular video. *Advances in neural information processing systems,* 2019, vol. 32, 35-45
- **LIN, G. ; MILAN, A. ; SHEN, C. ; REID, I.** Refinenet: Multi-path refinement networks for high-resolution semantic segmentation. *Proceedings of the IEEE conference on computer vision and pattern recognition,* 2017, 1925-1934